# EUROPÄISCHE PATENTSCHRIFT

(11) **EP 1 997 208 B1**
(45) Veröffentlichungstag und Bekanntmachung des Hinweises auf die Patenterteilung: **24.10.2012**
(21) Anmeldenummer: 07703224.1
(22) Anmeldetag: 02.02.2007
(51) Int. Cl.: H04B 3/54, H02J 13/00

(54) **SYSTEM UND VERFAHREN**
SYSTEM AND METHOD
SYSTEME ET PROCEDE

(30) Priorität: 15.03.2006 DE 102006012308
(43) Veröffentlichungstag der Anmeldung: 03.12.2008
(73) Patentinhaber: SEW-EURODRIVE GmbH & Co. KG, 76646 Bruchsal (DE)
(72) Erfinder: KOLLAR, Hans-Jürgen, 76646 Bruchsal (DE); SCHMIDT, Josef, 76676 Graben-Neudorf (DE); BENNERSCHEIDT, Ralf, 76137 Karlsruhe (DE)
(74) Vertreter: Tüngler, Eberhard
(86) Internationale Anmeldenummer: PCT/EP2007/000895
(87) Internationale Veröffentlichungsnummer: WO 2007/121802

(56) Entgegenhaltungen:
- WO-A-99/16160
- DE-A1- 4 225 534
- DE-A1-102004 043 186
- US-B1- 6 288 630

## Beschreibung

Die Erfindung betrifft ein System und ein Verfahren zum **Betreiben eines Systems.**

Aus der DE 199 21 654 ist ein System bekannt, bei dem Antriebe aus einem Versorgungsmodul mit Gleichspannung versorgbar sind.

Aus der DE 42 25 534 A1 ist ein System zum Betreiben, Steuern und Überwachen von antrieben in untertägigem Betrieb bekannt.

Aus der WO 99116160 A2 ist eine niederfrequente Datenübertragung über ein Leistungsversorgungskabel bekannt.

Aus der DE 10 2004 043 186 A1 ist ein multifunktionelles Integriertes Automatlslerungskabelsystem bekannt.

Der Erfindung liegt daher die Aufgabe zugrunde, ein System zur dezentralen Versorgung von Antrieben weiterzubilden, wobei eine möglichst kostengünstige Verkabelung vorsehbar sein soll.

Erfindungsgemäß wird die Aufgabe bei dem System nach den in Anspruch 1 und bei dem Verfahren nach dem in Anspruch 13 gegebenen Merkmalen gelöst.

Wichtige Merkmale der Erfindung bel dem System sind, dass es ein Versorgungsmodul umfasst, über welches Verbraucher mit Energie und Daten versorgbar sind,
wobei die Verbraucher mit dem Versorgungsmodul mittels zumindest drei Leitungen verbunden sind,
wobel in einer zweiten Betriebsart vom Versorgungsmodul über die drei Leitungen ein Drehspannungssystem an die Verbraucher einspeisbar ist, wobei
- mittels Phasenfolge des Drehspannungssystem Information über die Drehrichtung, insbesondere die Soli-DrehriChturtg, und/oder
- mittels Frequenz des Drehspannungssystems Information über die Drehzahl eines Elektromotors eines Verbrauchers vorgebbar ist, insbesondere die Soll-Drehzahl.

Von Vorteil ist dabei, dass ein einziges Versorgungsmodul für eine Automatisierungszelle notwendig ist. Es sind also Antriebe mit Energie und Information aus einem solchem Modul versorgbar über eine Verkabelung, die nur handelsübliche und daher kostengünstige Drehstromkabel umfasst. Eine 24V Steuerspannungsversorgung und/oder ein Feldbusanschluss der Verbraucher ist überflüssig. Die Daten werden überraschenderweise über das Drehstromkabel austauschbar, ohne hochfrequente Aufmodulation auf das Energleslgnal. Somit ist die Verlegung eines einzigen Kabels in der Anlage ausreichend. Es muss kein separates Kabel für Datenübertragung verlegt werden.

Weiter ist vorteilhaft, dass die von einem Umrichter bei generatorischer Betriebsart des jeweiligen Antriebs gegebenenfalls in die Drehstromkabel-Verkabelung rückgespeiste Energie anderen Antrieben zur Verfügung stellbar ist. Somit ist es ausreichend im Versorgungsmodul einen Widerstand R_BR vorzusehen zur Vernichtung überschüssiger Energie.

Die Antriebe sind also ohne einen solchen externen Bremswiderstand ausstatlbar. Somit sind auch Probleme bei Dichtigkeit und der erhöhte Montageaufwand sowie die Materialkosten einsparbar.

Bei Bedarf sind die Antriebe mit einem integrierten Bremswiderstand zusätzlich ausstattbar.

Weiter vorteilig ist, dass die Netzentstörung und ein Überspannungsschutz zentral im Versorgungsmodul vorsehbar sind. Die jeweiligen Antriebe benötigen daher diese Mittel nicht und sind somit kompakter, einfacher und kostengünstiger herstellbar.

Vorteilig ist auch, dass schon bestehende Verkabelungsstrukturen in Anlagen oder Maschinen für die Erfindung nutzbar sind. Es müssen also nur die entsprechenden Antriebe und das Versorgungsmodul in der Anlage eingebaut werden.

Erfindungsgemäß bilden in einer ersten Betriebsart zwei der Leitungen eine Spannungsversorgung für die Verbraucher und die dritte Leitung ist zur Datenübertragung vorgesehen, insbesondere zur Übertragung von Daten und/oder Programmen. Von Vorteil ist dabei, dass verschiedene Betriebsarten ausführbar sind, insbesondere ist eine erste Betriebsart zur Parametrierung und Daten sowie Programmübertragung und eine zweite Betriebsart zum Betrieb ermöglicht.

Außerdem sind Energie und Information in dieser ersten Betriebsart voneinander separiert und nicht auf demselben physikalischen Träger, insbesondere zur Verminderung der Störungen bei Informationsübertragung. Die Erfindung ist also besonders vorteilhaft zur einfachen und schnellen Verkabelung einer Automatisierungszelle verwendbar, wobei geringe Störspannungen bei der Inbetriebnahme oder Parametrierung oder Programmierung auftreten sollen. In der nachfolgenden zweiten Betriebsart werden die Drehstromkabel zur Übertragung voller Leistung verwendet.

Bei einer vorteilhaften Ausgestaltung ist am Versorgungsmodul ausgangsseitig ein Transformator vorgesehen, insbesondere zur galvanischen Trennung und/oder Erhöhung der Sicherheit. Von Vorteil ist dabei, dass ein sicheres Abschalten von Antrieben ausführbar ist.

Bei einer vorteilhaften Ausgestaltung ist das Versorgungsmodul eine sichere Niederspannungs-Versorgungsspannung vorgesehen. Von Vorteil ist dabei, dass die Sicherheit erhöht ist.

Bei einer vorteilhaften Ausgestaltung sind mit dem Versorgungsmodul Mittel zur Erfassung des Stromes im Drehspannungssystem, insbesondere des sekundärseitigen Stromes des Transformators, vorgesehen. Von Vorteil ist dabei, dass die Sicherheit weiter erhöht ist. Denn es wird der den Antrieben zugeführte Strom bestimmt.

Bei einer vorteilhaften Ausgestaltung sind Verbraucher elektrische Antriebe. Von Vorteil ist dabei, dass die Verbraucher steuerbar und mit hohem Wirkungsgrad betreibbar sind.

Bei einer vorteilhaften Ausgestaltung ist als Spannungsversorgung über die beiden Leitungen eine einphasige Wechselspannung oder eine unipolare Spannung, wie Gleichspannung oder dergleichen, vorgesehen. Von Vorteil ist dabei, dass die Erfindung mit beiden Sorten von Versorgungsspannung wahlweise ausführbar ist.

Bei einer vorteilhaften Ausgestaltung sind die Verbraucher mit dem Versorgungsmodul mittels die drei Leitungen umfassendem Drehstromkabel verbunden. Von Vorteil ist dabei, dass bekannte handelsübliche Drehstromkabel verwendbar sind.

Bei einer vorteilhaften Ausgestaltung umfasst das Versorgungsmodul Mittel zur Herstellung einer unipolaren Spannung, insbesondere Zwischenkreisspannung. Von Vorteil ist dabei, dass diese den Antrieben zur Verfügung stellbar ist.

Bei einer vorteilhaften Ausgestaltung sind vom Versorgungsmodul oder einem jeweiligen Antrieb die dritte Leitung auf zwei verschiedene elektrische Potentiale bringbar, insbesondere zur digitalen Datenübertragung. Von Vorteil ist dabei, dass das positive oder negative Potential der Zwischenkreisspannung auf die Datenleitung schaltbar ist und somit digitale Information übertragbar ist.

Bei einer vorteilhaften Ausgestaltung umfasst das Versorgungsmodul und/oder ein Antrieb zumindest eine Sende- und/oder eine Empfangsschaltung, die zur Datenübertragung über die dritte Leitung vorgesehen sind. Von Vorteil ist dabei, dass die dritte Datenleitung ungestört von den Störspannungen ist, welche auf den Energie-Leitungen auftreten können.

Bei einer vorteilhaften Ausgestaltung umfasst das Versorgungsmodul einen Bremswiderstand. Von Vorteil ist dabei, dass ein einziger genügt für das gesamte System. Somit sind Dichtigkeitsprobleme bei den versorgten Antrieben vermeidbar, auch wenn sie generatorisch betreibbar sind.

Bei einer vorteilhaften Ausgestaltung umfasst der Antrieb einen Umrichter und einen von diesem versorgbaren Elektromotor. Von Vorteil ist dabei, dass ein geregelter und somit gut steuerbarer Antrieb vorgesehen ist, insbesondere ein Antrieb mit hohem Wirkungsgrad.

Bel einer vorteilhaften Ausgestaltung umfasst das Versorgungsmodul einen Gleichrichter und einen Glättungskondensator, insbesondere Zwischenkreiskondensator, zur Herstellung der unipolaren Spannung. Von Vorteil ist dabei, dass die Gleichspannung zur Versorgung der Wechselrichter-Endstufen der Antreibe zentral zur Verfügung stellbar ist.

Bei einer vorteilhaften Ausgestaltung ist aus der unipolaren Spannung eine Endstufe, umfassend elektronische Leistungshalbleiterschalter, versorgbar. Von Vorteil ist dabei, dass IGBT oder ähnlich verlustarme Schalter verwendbar sind.

Bei einer vorteilhaften Ausgestaltung umfasst jeder Antrieb einen Bremsgleichrichter. Von Vorteil ist dabei, dass der Bremsgleichrichter integriert ausführbar ist und die Wärme über die gesamte Anlage aufgespreizt ist. Somit ist das Wärmeabfuhrproblem von Komponenten hohen Temperaturniveaus entschärft.

Bei einer vorteilhaften Ausgestaltung umfasst die Verkabelung zwischen Versorgungsmodul und Antrieben Drehstromkabel und Drehstrom-Verteilerkästen, insbesondere zur T-förmiger Drehstromverteilung. Von Vorteil ist dabei, dass einfache Mittel vorgesehen sind. Insbesondere sind schon bestehende Mittel bei Einftihrung der Erfindung verwendbar.

Wichtige Merkmale bei dem Verfahren zum Betreiben eines Systems nach Anspruch 21 sind, dass es ein Versorgungsmodul umfasst, über welches Verbraucher mit Energie und Daten versorgbar sind,
wobei die Verbraucher mit dem Versorgungsmodul mittels zumindest drei Leitungen verbunden sind,
wobei
in einer zweiten Betriebsart vom Versorgungsmodul über die drei Leitungen ein Drehspannungssystem an die Verbraucher eingespeist wird, wobei
- mittels Phasenfolge des Drehspannungssystem die Soll-Drehrichtung, und/oder
- mittels Frequenz des Drehspannungssystems die Soll-Drehzahl eines Elektromotors eines Verbrauchers vorgegeben wird.

Von Vorteil ist dabei, dass keine Datenleitungen zur Kommunikation notwendig sind sondern die Information im Verlauf der Wechselspannungen codiert sind. Außerdem ist sogar ein Drehstrommotor direkt als Verbraucher anschließbar und betreibbar und zugleich steuerbar.

Erfindungsgemäß werden in einer ersten Betriebsart zwei der Leitungen für eine Spannungsversorgung der Verbraucher verwendet und die dritte Leitung wird zur Datenübertragung verwendet, insbesondere zur Übertragung von Daten und/oder Programmen. Von Vorteil ist dabei, dass die Störungen bei der Datenübertragung gering sind, da die Datenleitung abgetrennt ist von den Energieleitungen.

Bei einer vorteilhaften Ausgestaltung werden vom Versorgungsmodul an die Verbraucher mittels Frequenzmodulation des Drehspannungssystems übertragen. Von Vorteil ist dabei, dass in der Versorgungsspannung Information codierbar ist, ohne dass die übertragene Leistung vermindert werden müsste wegen der Datenübertragung.

Wichtige Merkmale bei dem Verfahren zum Betreiben eines Systems nach Anspruch 21 sind, dass es ein Versorgungsmodul umfasst, über welches Verbraucher mit Energie und Daten versorgbar sind,
wobei die Verbraucher mit dem Versorgungsmodul mittels zumindest drei Leitungen verbunden sind,
wobei
vom Versorgungsmodul über die drei Leitungen ein Drehspannungssystem an die Verbraucher eingespeist wird, wobei
- mittels Modulation der Frequenz des Drehspannungssystems Daten an die Verbraucher übertragen werden.

Von Vorteil ist dabei, dass Daten ohne Beeinflussung der übertragbaren Leistung zusätzlich übertragbar sind. Dies bedeutet, dass die Verkabelung maximal auslastbar ist und trotzdem noch Daten übertragbar sind.

Bei einer vorteilhaften Ausgestaltung werden als Drehspannungssystem ein Rechteck-Drehspannungssystem oder ein sinusförmige Drehspannungssystem eingesetzt.

Weitere Vorteile ergeben sich aus den Unteransprüchen.

### Bezugszeichenliste

- 1: Versorgungsmodul
- 2: Netzentstorung
- 3: Zwischenkreiskondensator
- 4: Optionaler Tief/Hochsetzsteller
- 5: Netzversorgung
- 6: Datenleitung zur SPS
- 7: Kommunlketions- und Steuereinheit
- 8: Steuerschaltung
- 9: Sendeschaltung
- 10: Empfangsschaltung
- 11: Leistungsübertragung
- 12: Datenleitung
- 13: Erster Antrieb
- 14: Erster Umrichter, einphasig betreibbar
- 16: Kommunikation- und Steuerschaltung
- 17: Netzteil
- 18: Sendeschaltung
- 19: Empfangsschaltung
- 20: weiterer Antrieb
- 21: Protokoll / Pegelumsetzer
- 30: Strom- und Spannungsüberwachung
- 31: Steuer- und Kommunikationsschaltung
- 32: dreiphasiges blockformiges Drehspannungssystem
- 40: Spannungswerterfassung
- 41: dreiphasiges sinusförmiges Drehspannungssystem
- 42: sichere Versorgungsspannung
- 43: Drehstrom-Transformator
- R_BR: Bremswiderstand
- D1, D2, D3, D4, D5: Diode
- T1, T2, T3, T4, T5: Halbleiterschalter

Die Erfindung wird nun anhand von Abbildungen näher erläutert:

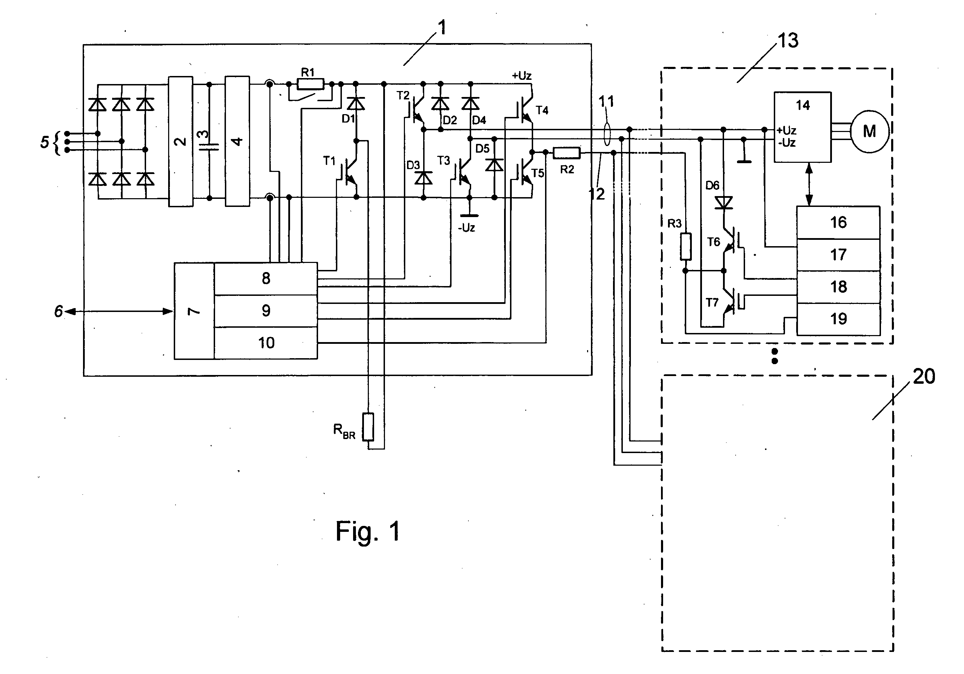

In der Figur 1 ist eine erfindungsgemäße Anlage schematisch gezeichnet.

Dabei umfasst die Anlage ein Versorgungsmodul 1, das vom Netz versorgbar ist über die Netzversorgung 5 und über eine Datenleitung 6 mit einer SPS oder einem anderen Rechner zum Datenaustausch verbindbar ist.

Das Versorgungsmodul umfasst einen Gleichrichter, dem eine Netzentstörung 2 nachgeordnet ist. Ein Zwischenkreiskondensator 3 ist zur Glättung der unipolar gleichgerichteten Spannung vorgesehen. Wahlweise kann dem Zwischenkreiskondensator 3 ein Tief/Hochsetzsteller 4 nachgeordnet werden zur Herstellung der gewünschten Zwischenkreisspannung, aus der die Endstufe versorgbar ist.

Zur Regelung der Zwischenkreisspannung ist ein Bremswiderstand R_BR vorgesehen, der über einen elektronischen Halbleiterschalter, wie IGBT Transistor oder dergleichen, zu- oder abschaltbar ist. Zur Ansteuerung dieses Schalters ist die Steuerschaltung 8 vorgesehen. Diese ist mit Mitteln zur Erfassung der Zwischenkreisspannung und/oder des Zwischenkreisstroms verbunden. Somit wird der Schalter spannungsabhängig ansteuerbar. Dadurch, dass der Strom auf oberem und unterem Potential des Zwischenkreises erfassbar ist, ist eine Erdschlusserkennung ausführbar. Diese ist somit kostengünstig und einfach herstellbar vorsehbar.

Von der SPS oder dem anderen übergeordneten Rechner sind Daten übertragbar an die Kommunikations- und Steuereinheit 7, die mit der Steuerschaltung 8 verbunden ist. Hierzu ist die Datenleitung 6 entsprechend ausgeführt.

Die Endstufe umfasst Schalter zum Zuschalten oder Abschalten der Zwischenkreisspannung zu den verbundenen Antrieben. Hierzu sind die Schalter (T2, T3) vorgesehen. Zwei Leitungen 11 des Drehstromkabels versorgen somit die verbundenen Antriebe mit Gleichspannung.

Die Datenleitung 12 wird von einer Halbbrücke der Endstufe gespeist, welche zwei Schalter (T4, T5) umfasst. Somit ist das Potential dieser Datenleitung 12 auf positives oder negatives Potential (+Uz, -Uz) der Zwischenkreisspannung legbar. Auf diese Weise ist daher digitale Information übertragbar. Hierzu ist die Sendeschaltung 9 vorgesehen und mit den Schaltern T4, T5 der Halbbrücke verbunden. Entsprechend ist die Empfangsschaltung 10 mit der Datenleitung 12 des Drehstromkabels verbunden.

Zwei der drei Starkstromleitungen des Drehstromkabels sind also für die Leistungsversorgung der Antriebe und eine der Leitungen zur Datenübertragung vorgesehen.

Die Antriebe umfassen jeweils einen Motor M, der aus einem mit Gleichspannung betreibbaren Umrichter 14 versorgbar ist und eine Sendeschaltung 18 und eine Empfangsschaltung 19, welche aus einem Versorgungsteil, wie Netzteil 17, versorgbar sind und über eine Kommunikations- und Steuerschaltung 16 mit dem Umrichter 14 verbunden sind. Das Netzteil ist aus dem Drehstromkabel versorgbar, insbesondere aus den Leitungen 11.

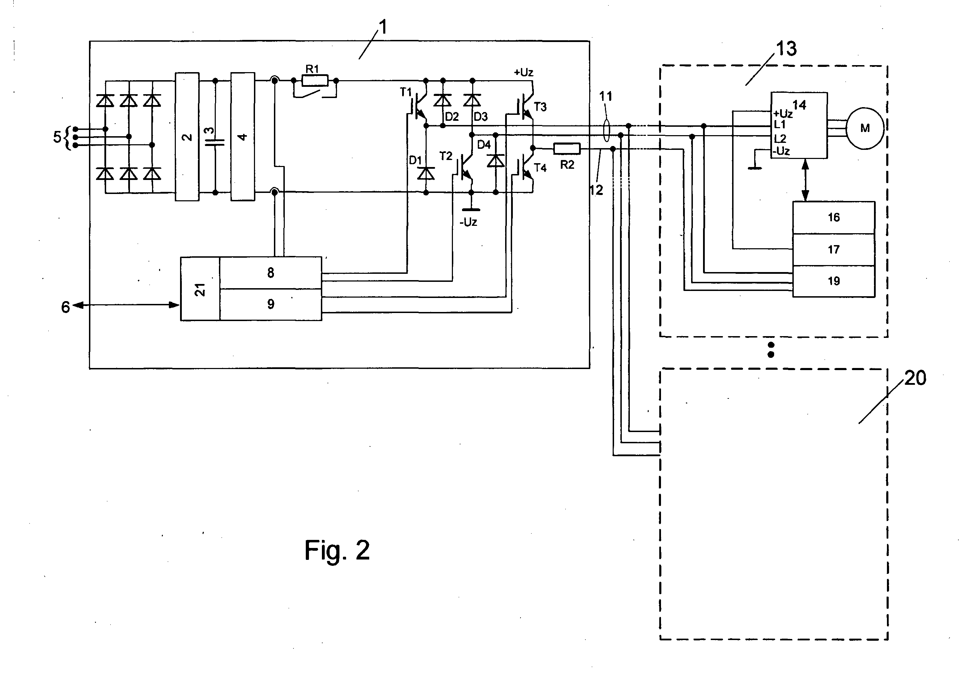

In dem weiteren Ausführungsbeispiel nach Figur 2 weist das Versorgungsmodul nur eine Sendeeinheit auf und die jeweiligen Antriebe nur Empfangseinheiten auf.

Somit ist die Kommunikations- und Steuerschaltung 16 als einfacher Protokoll- und/oder Pegelumsetzer ausführbar.

Auf diese Weise ist das gesamte System einfacher und kostengünstiger ausführbar, wobei allerdings die Datenübertragung nur unidirektional und nicht bidirektional wie bei Figur 1 ist.

Bei weiteren erfindungsgemäßen Ausführungsbeispielen sind statt der Antriebe auch andere Verbraucher anschließbar.

Bei weiteren erfindungsgemäßen Ausführungsbeispielen umfasst die Endstufe drei Halbbrücken, wobei die ersten beiden Halbbrücken der Erzeugung einer einphasigen Wechselspannung dienen, die an die Leitungen 11 zur Versorgung der Antriebe gelegt wird. Die dritte Halbbrücke ist gegenüber Figur 1 unverändert. Die Verkabelung umfasst wiederum ein handelsübliches Drehstromkabel. Die ersten beiden Halbbrucken, umfassend jeweils zwei Schalter, sind derart pulsweitenmoduliert oder mit Rechtecksignalspannung ansteuerbar, dass in zwei Leitungen des Drehstromkabels eine einphasige Wechselspannung erzeugbar ist, mit der die verbundenen Antriebe (13 bis 20) versorgbar sind. Die Antriebe benötigen in diesem Ausführungsbeispiel einen einphasigen Gleichrichter und ebenfalls einen Glättungskondensator.

Bei weiteren erfindungsgemäßen Ausführungsbeispielen umfasst das Versorgungsmodul einen Matrix-Umrichter und ist somit Netz-rückspeisefähig. In dieser Ausführung ist der Bremswiderstand R_BR einsparbar.

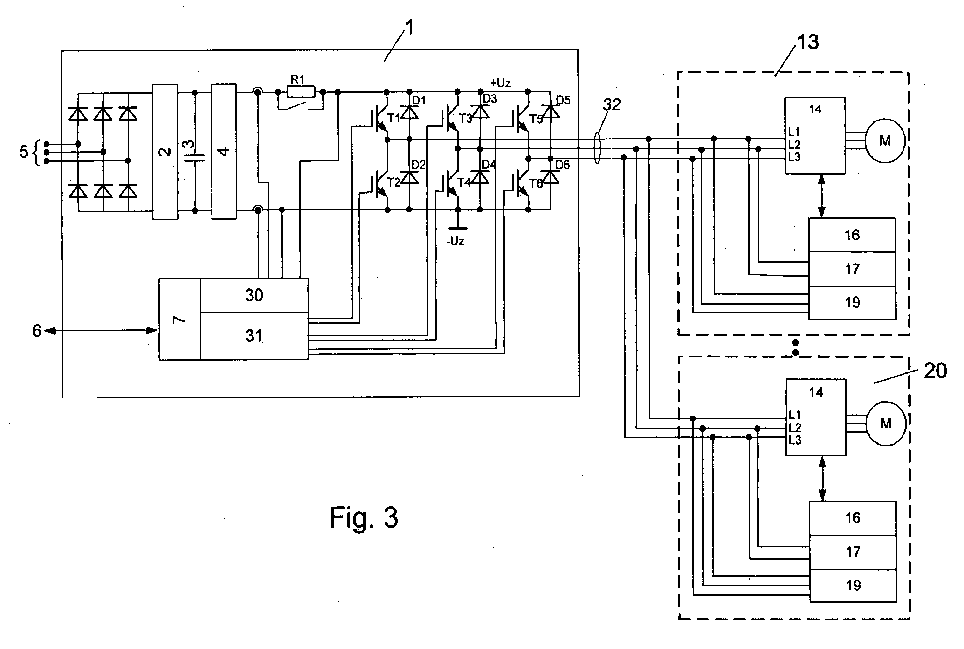

In der Figur 3 ist ein weiteres erfindungsgemäßes Ausführungsbeispiel gezeigt. Dabei ist wiederum eine Strom- und Spannungsüberwachung 30 vorgesehen, die mit einer Steuer-und Kommunikationsschaltung 31 verbunden ist, aus der die Ansteuersignale der drei Halbbrücken der Endstufe erzeugt werden.

Mittels der Steuer- und Kommunikationsschaltung 31 werden die Ansteuersignale der elektronischen Leistungsschalter der Endstufe erzeugt. Somit ist hierbei ein Abschalten der Ausgangsspannung oder ein Einschalten ebenfalls realisierbar.

Insbesondere wird im Betrieb die Ausgangsspannung als dreiphasiges blockförmiges Drehspannungssystem 32 vorgesehen, womit die verbundenen Antriebe versorgbar sind.

Die Netzentstörung und der Überspannungsschutz sind zentral im Versorgungsmodul integriert. Die Antriebe weisen Jeweils einen Gleichrichter auf und erzeugen aus der gleichgerichteten Spannung ein Drehspannungssystem zur Versorgung der versorgten Motoren.

Dabei wird vom Versorgungsmodul eine Phasenfolge und eine Frequenz für das dreiphasige blockförmige Drehspannungssystem 32 vorgegeben. Die Antriebe detektieren diese Information mit ihrer Empfangsschaltung. Über die Phasenfolge ist somit die Information über eine Drehrichtung vorgebbar. Über die Frequenz ist die Information über die Sollfrequenz des Motors vorgebbar.

Beim Betrieb ist also die Drehzahl und die Drehrichtung einfach übermittelbar. Auf diese Weise sind die Motoren steuerbar.

Vor Beginn des beschriebenen Betriebs ist eine erste unterschledliche Betriebsart ausführbar. Dabei werden entsprechend der Figur 1 zwei Leitungen des Drehstromkabels zur Übertragung der Energie in Form von Gleichspannung verwendet. Die dritte Leitung wird dann zur Datenübertragung verwendet, wobei abwechselnd das Potential +Uz und -Uz an die dritte Leitung angelegt wird.

Auf diese Weise ist eine erste Betriebsart realisierbar, in welcher den Antrieben Information übertragbar ist. Beispielsweise können Parameter übertragen werden oder andere betriebsnotwendige Daten oder Datensätze, wie Programme. Nach Beendigung der ersten Betriebsart wird dann die zweite Betriebsart gestartet, die dem oben schon beschriebenen Betrieb entspricht.

Bei weiteren erfindungsgemäßen Ausführungsbeispielen ist ein Verändern der Frequenz derart ausgeführt, dass Daten frequenzmoduliert übertragbar sind.

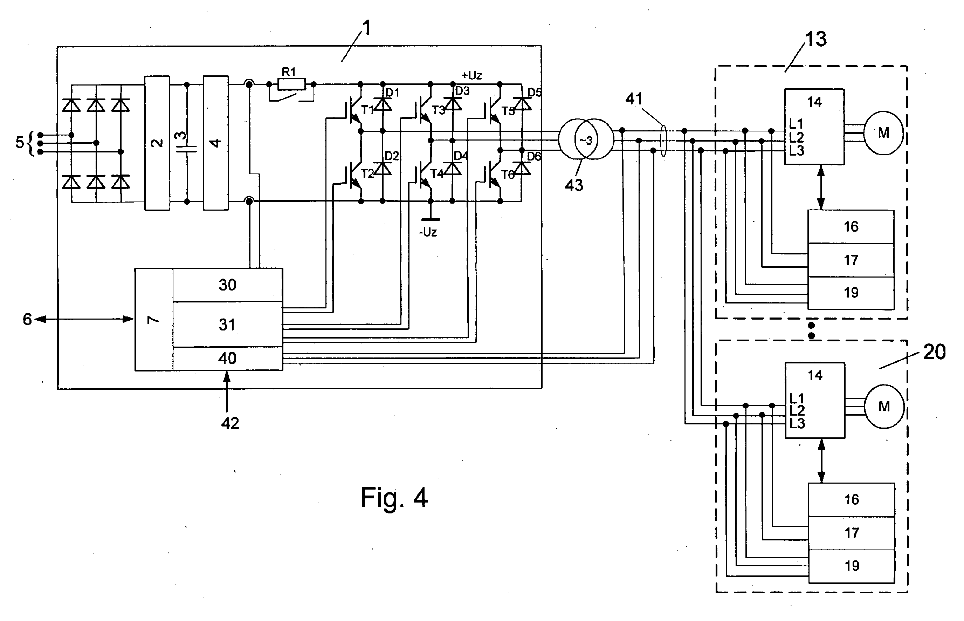

Bei dem erfindungsgemäßen Ausführungsbeispiel nach Figur 4 ist das Versorgungsmodul über einen Drehstrom-Transformator 43 mit der Drehstromverkabelung verbunden, über welche die Antriebe (13,20) versorgbar sind.

In einem Fehlerfall, in welchem statt der ausgangsseitigen Wechselspannung des Versorgungsmoduls nur ein konstantes Potential auf einer der drei Leitungen von der Endstufe ausgegeben wird, wird auf der Sekundärseite des Transformators 43 keine oder keine wesentliche Amplitude des Drehspannungssystems erreicht. Somit sind die Antriebe dann nicht mehr betreibbar. Durch den Transformator ist also ein sicheres Abschalten der Antriebe In einem solchen Fehlerfall erreicht.

Um die Sicherheit weiter zu erhöhen, ist das Versorgungsmodul mit einer sicheren, also auch unabhängigen Versorgungsspannung 42, insbesondere 24 V, ausgeführt.

Die Spannungswerterfassung 40 ist zur Erfassung der sekundärseitigen also verbraucherseitigen, Spannungen vorgesehen. Somit ist die Sicherheit weiter erhöhbar. Denn beim Absinken dieser so bestimmten Spannungswerte gegenüber den Sollspannungswerten ist ein sicheres Abschalten ausführbar.

Bei einem weitergebildeten erfindungsgemäßen Ausführungsbeispiel wird diese erfasste Spannung von einer Regelung derart verwendet, dass die Spannung auf einen gewünschten Sollwert gebracht wird, wobei als Stellgröße die Ansteuerungssignale der Leistungshalbleiterschalter der Endstufe verwendet werden.

Das ausgangsseitige dreiphasige Drehspannungssystem 41 ist rechteckförmig oder sinusförmig gewählt. Somit sind als Antriebe netzspannungsfähige Antriebe verwendbar.

Durch Frequenzmodulation sind Daten übertragbar vom Versorgungsmodul zu den Antrieben, die hierzu eine Empfangsschaltung 19 umfassen, die wiederum über den Protokoll und/oder Pegelumsetzer 16 mit dem Umrichter 14 verbunden sind.

Vorzugsweise wird bei der Frequenzmodulation ein Frequenzband von etwa 0 bis 1 kHz verwendet. Besonders einfach ist aber ein Frequenzband von etwa 0 bis 100 Hz vorzusehen und auszuführen. Denn dies entspricht im Wesentlichen der Netzfrequenz. Auch eine Ausdehnung auf ein Band von etwa 0 bis etwa 200 Hz ist noch einfach und kostengünstig realisierbar.

Bei einem weitergebildeten erfindungsgemäßen Ausführungsbeispiel wird in der ersten Betriebsart eine Datenübertragung frequenzmoduliert derart ausgeführt, dass die Frequenz zwischen zwei Frequenzwerten gewechselt wird. Die beiden Frequenzwerte sind vorzugsweise unterhalb 400 Hz vorgesehen. Beispielsweise sind die Werte 50 und 100 Hz oder 60 und 120 Hz verwendbar. Dabei ist durch die niedrige Frequenz eine Datenbit-mäßige 0 und durch die hohe Frequenz eine Datenbit-mäßige 1 reprasentierbar.

## Patentansprüche

1. System, umfassend ein Versorgungsmodul (1) über welches Verbraucher (13, 20) mit Energie und Daten versorgbar sind,
wobei die Verbraucher mit dem Versorgungsmodul mittels zumindest drei Leitungen (11, 12) verbunden sind,
**wobei in einer ersten Betriebsart zwei der Leitungen (11) elne Spannungsversorgung für die Verbraucher bilden und die dritte Leitung (12) zur Datenübertragung vorgesehen ist,**
und in einer zweiten Betriebsart vom Versorgungsmodul über die drei Leitungen ein Drehspannungssystem an die Verbraucher einspeisbar ist, wobei
- mittels Phasenfolge des Drehspannungssystems Information über die Drehrichtung, insbesondere die Soll-Drehrichtung, und/oder
- mittels Frequenz des Drehspannungssystems Information über die Drehzahl eines Elektromotors eines Verbrauchers vorgebbar ist, insbesondere die Soll-Drehzahl.

2. System nach mindestens einem der vorangegangenen Ansprüche,
**dadurch gekennzeichnet, dass**
die Phasen des Drehspennungssyatems zueinander phasenverschobene rechteckförmige oder sinusförmig Spannungen sind.

3. System nach mindestens einem der vorangegangenen Ansprüche,
**dadurch gekennzeichnet, dass**
als Datenübertragung die Übertragung von Daten und/oder Programmen vorgesehen ist.

4. System nach mindestens einem der vorangegangenen Ansprüche,
**dadurch gekennzeichnet, dass**
am Versorgungsmodul ausgangsseitig ein Transformator (43) vorgesehen ist, insbesondere zur galvanischen Trennung und/oder Erhöhung der Sicherheit, insbesondere zum sicheren Abschalten von Antrieben.

5. System nach mindestens einem der vorangegangenen Ansprüche,
**dadurch gekennzeichnet, dass**
das Versorgungsmodul eine sichere Niederspannungs-Versorgungsspannung vorgesehen ist.

6. System nach mindestens einem der vorangegangenen Ansprüche,
**dadurch gekennzeichnet, dass**
mit dem Versorgungsmodul Mittel zur Erfassung des Stromes im Drehspannungssystem, insbesondere des sekundärseitigen Stromes des Transformators, vorgesehen sind.

7. System nach mindestens einem der vorangegangenen Ansprüche,
**dadurch gekennzeichnet, dass**
Verbraucher elektrische Antriebe sind.

8. System nach mindestens einem der vorangegangenen Ansprüche,
**dadurch gekennzeichnet, dass**
als Spannungsversorgung über die beiden Leitungen eine einphasige Wechselspannung oder eine unipolare Spannung, wie Gleichspannung oder dergleichen, vorgesehen ist.

9. System nach mindestens einem der vorangegangenen Ansprüche,
**dadurch gekennzelchnet, dass**
die Verbraucher mit dem Versorgungsmodul miltels die drei Leitungen umfassendem Drehstromkabel verbunden sind.

10. System nach mindestens einem der vorangegangenen Ansprüche,
**dadurch gekennzeichnet, dass**
das Versorgungsmodul Mittel zur Herstellung einer unipolaren Spannung umfasst, insbesondere Zwischenkreisspannung.

11. System nach mindestens einem der vorangegangenen Ansprüche,
**dadurch gekennzeichnet, dass**
vom Versorgungsmodul oder einem jeweiligen Antrieb die dritte Leitung auf zwei verschiedene elektrische Potentiale bringbar sind, insbesondere zur digitalen Datenübertragung.

12. System nach mindestens einem der vorangegangenen Ansprüche,
**dadurch gekennzeichnet, dass**
das Versorgungsmodul und/oder ein Antrieb zumindest eine Sende- und/oder eine Empfangsschaltung (9, 10) umfasst oder umfassen, die zur Datenübertragung über die dritte Leitung vorgesehen sind
und/oder dass
das Versorgungsmodul einen Bremswiderstand, eine Netzentstörung (2) insbesondere Netzfilter, und/oder ein Überspannungsschutz, umfasst
und/oder dass
der Antrieb einen Umrichter (14) und einen von diesem versorgbaren Elektromotor umfasst
und/oder dass
das Versorgungsmodul einen Gleichrichter und einen Glättungskondensator (3) insbesondere Zwischenkreiskondensator, umfasst zur Herstellung der unipolaren Spannung
und/oder dass
aus der unipolaren Spannung eine Endstufe, umfassend elektronische Leistungshalbleiterschalter (T1, T2, T3, T4, T5), versorgbar ist
und/oder dass
jeder Antrieb einen Bremsgleichrichter umfasst
und/oder dass
die Verkabelung zwischen Versorgungsmodul und Antrieben Drehstromkabel und Drehstrom-Verteiterkästen, insbesondere zur T-förmiger Drehstromverteilung, umfasst.

13. Verfahren zum Betreiben eines Systems, umfassend ein Versorgungsmodul (1) über welches Verbraucher (13, 20) mit Energie und Daten versorgbar sind,
wobei die Verbraucher mit dem Versorgungsmodul mittels zumindest drei Leitungen (11, 12) verbunden sind,
**wobei in einer ersten Betriebsart zwei der Leitungen (11) eine Spannungsversorgung für die Verbraucher bilden und die dritte Leitung (12) zur Datenübertragung vorgesehen ist,**
und in einer zweiten Betriebsart vom Versorgungsmodul über die drei Leitungen ein Drehspannungssystem an die Verbraucher eingespeist wird, wobei
- mittels Phasenfolge des Drehspannungssystem die Soll-Drehrichtung, und/oder
- mittels Frequenz des Drehspannungssystems die Soll-Drehzahl eines Elektromotors eines Verbrauchers vorgegeben wird.

14. Verfahren nach Anspruch 13,
**dadurch gekennzeichnet, dass**
Daten vom Versorgungsmodul an die Verbraucher mittels Frequenzmodulation des Drehspannungssystems übertragen werden.

## Claims

1. System, comprising a supply module (1), via which loads (13, 20) can be supplied with power and data,
wherein the loads are connected to the supply module by means of at least three lines (11, 12),
wherein in a first operating mode two of the lines (11) constitute a voltage supply for the loads and the third line (12) is provided for data transmission,
and in a second operating mode a three-phase voltage system can be fed from the supply module to the loads via the three lines, wherein
- by means of the phase sequence of the three-phase voltage system, information on the direction of rotation, in particular the desired direction of rotation, can be set, and/or
- by means of the frequency of the three-phase voltage system, information on the rotational speed of an electric motor of a load, in particular the desired rotational speed, can be set.

2. System according to at least one of the preceding claims,
**characterised in that**
the phases of the three-phase voltage system are square-wave or sinusoidal voltages phase-shifted relative to one another.

3. System according to at least one of the preceding claims,
**characterised in that**
the transmission of data and/or programs is provided as the data transmission.

4. System according to at least one of the preceding claims,
**characterised in that**
a transformer (43) is provided on the supply module on the output side, in particular for electrical isolation and/or increasing safety, in particular for safe switching-off of drives.

5. System according to at least one of the preceding claims,
**characterised in that**
the supply module is provided as a secure low-voltage supply voltage.

6. System according to at least one of the preceding claims,
**characterised in that**
with the supply module, means for detecting the current in the three-phase voltage system, in particular of the secondary-side current of the transformer, are provided.

7. System according to at least one of the preceding claims,
**characterised in that**
loads are electric drives.

8. System according to at least one of the preceding claims,
**characterised in that**
a single-phase AC voltage or a unipolar voltage, such as DC voltage or the like, is provided as the supply voltage via the two lines.

9. System according to at least one of the preceding claims,
**characterised in that**
the loads are connected to the supply module by means of a three-phase current cable comprising the three lines.

10. System according to at least one of the preceding claims,
**characterised in that**
the supply module comprises means for producing a unipolar voltage, in particular an intermediate circuit voltage.

11. System according to at least one of the preceding claims,
**characterised in that**
the third line can be brought to two different electric potentials by the supply module or a respective drive, in particular for digital data transmission.

12. System according to at least one of the preceding claims,
**characterised in that**
the supply module and/or a drive comprises or comprise at least one transmitting circuit and/or one receiving circuit, which are provided for data transmission via the three lines,
and/or **in that**
the supply module comprises a braking resistor, mains interference suppression (2), in particular a mains filter, and/or overvoltage protection
and/or **in that**
the drive comprises a converter (14) and an electric motor which can be supplied by the latter
and/or **in that**
the supply module comprises a rectifier and a smoothing capacitor (3), in particular an intermediate circuit capacitor, for producing the unipolar voltage
and/or **in that**
an output stage, comprising electronic power semiconductors (T1, T2, T3, T4, T5), can be supplied from the unipolar voltage
and/or **in that**
each drive comprises a braking rectifier
and/or **in that**
the cabling between the supply module and drives comprises three-phase current cables and three-phase current distribution boxes, in particular for T-shaped three-phase current distribution.

13. Method for operating a system, comprising a supply module (1), via which loads (13, 20) can be supplied with power and data,
wherein the loads are connected to the supply module by means of at least three lines (11, 12),
wherein in a first operating mode two of the lines (11) constitute a voltage supply for the loads and the third line (12) is provided for data transmission,
and in a second operating mode a three-phase voltage system is fed from the supply module to the loads via the three lines, wherein
- by means of the phase sequence of the three-phase voltage system, the desired direction of rotation, is set, and/or
- by means of the frequency of the three-phase voltage system, the desired rotational speed of an electric motor of a load, is set.

14. Method according to Claim 13,
**characterised in that**
data are supplied from the supply module to the loads by means of frequency modulation of the three-phase voltage system.

## Revendications

1. Système, comprenant un module d'alimentation (1) par lequel des récepteurs (13, 20) peuvent être alimentés en énergie et en données,
les récepteurs étant reliés au module d'alimentation au moyen d'au moins trois lignes (11, 12),
dans lequel, dans un premier mode de fonctionnement, deux des lignes (11) forment une alimentation en tension pour les récepteurs et la troisième ligne (12) est prévue pour la transmission de données,
et, dans un deuxième mode de fonctionnement, le module d'alimentation peut fournir par les trois lignes un système de tension triphasée aux récepteurs,
- l'ordre des phases du système de tension triphasée permettant de spécifier une information sur le sens de rotation, en particulier le sens de rotation de consigne, et/ou
- la fréquence du système de tension triphasée une information sur la vitesse de rotation, en particulier la vitesse de rotation de consigne, d'un moteur électrique d'un récepteur.

2. Système selon au moins une des revendications précédentes,
**caractérisé en ce que**
les phases du système de tension triphasée sont des tensions rectangulaires ou sinusoïdales déphasées les unes par rapport aux autres.

3. Système selon au moins une des revendications précédentes,
**caractérisé en ce que**
il est prévu la transmission de données et/ou de programmes en tant que transmission de données.

4. Système selon au moins une des revendications précédentes,
**caractérisé en ce que**
un transformateur (43) est prévu côté sortie sur le module d'alimentation, en particulier pour la séparation galvanique et/ou pour augmenter la sécurité, en particulier pour la déconnexion sûre d'entraînements.

5. Système selon au moins une des revendications précédentes,
**caractérisé en ce que**
le module d'alimentation est prévu avec une tension d'alimentation à basse tension sûre.

6. Système selon au moins une des revendications précédentes,
**caractérisé en ce que**
des moyens sont prévus avec le module d'alimentation pour détecter le courant dans le système de tension triphasée, en particulier le courant côté secondaire du transformateur.

7. Système selon au moins une des revendications précédentes,
**caractérisé en ce que**
les récepteurs sont des entraînements électriques.

8. Système selon au moins une des revendications précédentes,
**caractérisé en ce que**
une tension alternative monophasée ou une tension unipolaire, comme une tension continue ou analogue, est prévue comme alimentation en tension par les deux lignes.

9. Système selon au moins une des revendications précédentes,
**caractérisé en ce que**
les récepteurs sont reliés au module d'alimentation au moyen de câbles triphasés comprenant les trois lignes.

10. Système selon au moins une des revendications précédentes,
**caractérisé en ce que**
le module d'alimentation comprend des moyens pour produire une tension unipolaire, en particulier une tension de circuit intermédiaire.

11. Système selon au moins une des revendications précédentes,
**caractérisé en ce que**
la troisième ligne peut être mise à deux potentiels électriques différents par le module d'alimentation ou un entraînement respectif, en particulier pour la transmission numérique de données.

12. Système selon au moins une des revendications précédentes,
**caractérisé en ce que**
le module d'alimentation et/ou un entraînement comprend ou comprennent au moins un circuit d'émission et/ou de réception (9, 10) qui sont prévus pour la transmission de données par la troisième ligne
et/ou que
le module d'alimentation comprend une résistance de freinage, un élément de déparasitage de réseau (2), en particulier un filtre de réseau, et/ou une protection contre la surtension
et/ou que
l'entraînement comprend un variateur de vitesse (14) et un moteur électrique pouvant être alimenté par celui-ci
et/ou que
le module d'alimentation comprend un redresseur et un condensateur de lissage (3), en particulier un condensateur de circuit intermédiaire, pour produire la tension unipolaire
et/ou que
un étage final comprenant des commutateurs électroniques de puissance à semiconducteurs (T1, T2, T3, T4, T5) peut être alimenté par la tension unipolaire
et/ou que
chaque entraînement comprend un redresseur de frein
et/ou que
le câblage entre module d'alimentation et entraînements comprend des câbles triphasés et des coffrets de distribution triphasés, en particulier pour la distribution triphasée en T.

13. Procédé de fonctionnement d'un système comprenant un module d'alimentation (1) par lequel des récepteurs (13, 20) peuvent être alimentés en énergie et en données,
dans lequel les récepteurs sont reliés au module d'alimentation au moyen d'au moins trois lignes (11, 12),
dans lequel, dans un premier mode de fonctionnement, deux des lignes (11) forment une alimentation en tension pour les récepteurs et la troisième ligne (12) est prévue pour la transmission de données,
et, dans un deuxième mode de fonctionnement, le module d'alimentation peut fournir par les trois lignes un système de tension triphasée aux récepteurs,
- l'ordre des phases du système de tension triphasée permettant de spécifier le sens de rotation de consigne et/ou
- la fréquence du système de tension triphasée la vitesse de rotation de consigne d'un moteur électrique d'un récepteur.

14. Procédé selon la revendication 13,
**caractérisé en ce que**
des données sont transmises du module d'alimentation aux récepteurs au moyen d'une modulation de fréquence du système de tension triphasée.
